# EUROPÄISCHE PATENTANMELDUNG

(11) **EP 4 670 898 A1**
(43) Veröffentlichungstag der Anmeldung: **31.12.2025**
(21) Anmeldenummer: 25176133.4
(22) Anmeldetag: 13.05.2025
(51) Int. Cl.: B23K 26/0622, B23K 26/24, B23K 26/60, B23K 101/04, B23K 103/10, B23K 103/12

(54) **SCHWEISSVERFAHREN ZUR ERZEUGUNG EINER SCHWEISSNAHT MIT MINDESTENS EINER NADELPORE, SCHWEISSGRUPPE SOWIE VERWENDUNG DER SCHWEISSGRUPPE**

(30) Priorität: 31.05.2024 DE 102024205049
(71) Anmelder: Robert Bosch GmbH, 70442 Stuttgart (DE)
(72) Erfinder: Heider, Andreas, 72351 Geislingen (DE); Kunz, Gerhard, Charleston, 29418 (US); Gauch, Roland, 71272 Renningen (DE); Ilin, Alexander, 71642 Ludwigsburg (DE); Schaenzel, Michael, 73572 Heuchlingen (DE); Bantel, Christoph, 71254 Ditzingen (DE)

(57) **Zusammenfassung**

Die Erfindung betrifft ein Schweißverfahren zur Erzeugung einer Schweißnaht (1) mit mindestens einer Nadelpore (2) bei einem Schweißvorgang von zwei Schweißpartnern (3, 4) zur Bildung einer Schweißgruppe (5), wobei die Schweißpartner (3, 4) jeweils eine Fügefläche aufweisen, wobei die Schweißpartner (3, 4) für den Schweißvorgang an den Fügeflächen benachbart und/oder kontaktierend angeordnet werden, um einen Fügestoß (8) zu bilden, wobei vor dem Schweißvorgang mindestens eine der Fügeflächen mit einem Kontaminationsmittel (10) in einem Kontaminationsbereich (11) kontaminiert wird, wobei bei dem Schweißvorgang in der Schweißnaht (1) an dem Fügestoß (8) die mindestens eine Nadelpore (2) gebildet wird. Die Erfindung betrifft weiter eine Schweißgruppe (**5**) mit zwei Schweißpartnern (**3**, **4**).

## Beschreibung

Die Erfindung betrifft ein Schweißverfahren zur Erzeugung einer Schweißnaht mit mindestens einer Nadelpore mit den Merkmalen des Anspruchs 1. Die Erfindung betrifft auch eine Schweißgruppe, welche mit dem Schweißverfahren verschweißt wurde sowie eine Verwendung der Schweißgruppe.

### Stand der Technik

Das eigentliche Ziel einer Schweißung von Bauteilen ist es, eine makellose und qualitativ hochwertige Schweißnaht zu erzeugen. Insbesondere sind in den Schweißnähten Schweißporen unerwünscht. Es wird mithilfe von Techniken der Qualitätsüberwachung oftmals sichergestellt, dass dieses Ziel erreicht wird.

### Offenbarung der Erfindung

Gegenstand der Erfindung sind ein Schweißverfahren, eine Schweißgruppe sowie eine Verwendung der Schweißgruppe mit den Merkmalen der unabhängigen Patentansprüche.

Weitere bevorzugte oder vorteilhafte Ausführungsformen der Erfindung ergeben sich aus den Unteransprüchen.

Gegenstand der Erfindung ist ein Schweißverfahren zur Erzeugung einer Schweißnaht. Das Schweißverfahren wird in einem Schweißvorgang umgesetzt, wobei mindestens oder genau zwei Schweißpartner über die Schweißnaht miteinander verschweißt werden, um eine Schweißgruppe zu bilden. Es ist vorgesehen, dass mindestens eine Nadelpore in der Schweißnaht, vorzugsweise eine Vielzahl von Nadelporen in der Schweißnaht erzeugt werden.

Unter einer Nadelpore wird im Rahmen der vorliegenden Erfindung eine Pore verstanden, welche im Wesentlichen die Form einer Nadel oder eines Schlauches aufweist und ihren Ursprung am Scheißgrund, oder anders ausgedrückt an der Nahtwurzel, hat.

Die Schweißpartner weisen jeweils eine Fügefläche auf, wobei die Schweißpartner für den Schweißvorgang an den Fügeflächen benachbart und/oder kontaktierend angeordnet werden. Insbesondere liegen die Schweißpartner mit den Fügeflächen flächig aneinander. Durch die Fügeflächen wird ein Fügestoß gebildet.

Vor dem Schweißvorgang wird genau eine, beide oder alle Fügeflächen mit einem Kontaminationsmittel in einem Kontaminationsbereich kontaminiert. Insbesondere überlappt der Kontaminationsbereich mit der späteren Schweißnaht. Somit wird die spätere Schweißnaht mit dem Kontaminationsmittel aktiv und/oder bestimmungsgemäß kontaminiert.

Bei dem Schweißvorgang wird in der Schweißnaht an dem Kontaminationsbereich durch das Kontaminationsmittel mindestens eine Nadelpore gebildet.

Der Vorteil der Erfindung ist es, dass die Nadelpore oder die Vielzahl der Nadelporen durch die Kontamination bestimmungsgemäß und absichtlich gebildet werden. Somit werden bestimmungsgemäß Nadelporen in die Schweißnaht eingebracht, um diese später einer funktionellen Anwendung zuzuführen. Es ist bei dem Schweißverfahren somit möglich, nicht nur die Schweißpartner zur Bildung der Schweißgruppe miteinander zu verbinden, sondern zugleich mindestens eine Nadelpore für die spätere Anwendung einzubringen. Auf diese Weise wird durch einen einzigen Fertigungsschritt eine Verfahrenskombination umgesetzt, nämlich die Erzeugung der Schweißnaht und die Bildung der mindestens einen Nadelpore.

Bei einer bevorzugten Ausgestaltung der Erfindung weist die Nadelpore ein Verhältnis zwischen einer Porenlänge in Tiefenrichtung und einem Porendurchmesser in einem Querschnitt von größer als 2, vorzugsweise größer als 10 auf, im Folgenden auch Schachtverhältnis genannt. Die Porenlänge ist insbesondere als eine Tiefe der Nadelpore ausgebildet. Der Porendurchmesser kann beispielsweise als ein durchschnittlicher Porendurchmesser entlang der Porenlänge ausgebildet sein, wobei im Speziellen jeweils eine offene Querschnittsfläche von der Nadelpore bestimmt wird und in Anlehnung an eine kreisrunde Querschnittsfläche der entsprechende Porendurchmesser bestimmt wird. Somit ist es unabhängig, welche Form die Querschnittsfläche aufweist, da die Querschnittsfläche in eine Kreisfläche umgerechnet wird und ausgehend von der Kreisfläche ein durchschnittlicher Porendurchmesser bestimmt wird.

Prinzipiell kann die Nadelpore geschlossen ausgebildet sein. Die Nadelpore kann dann eine Leichtbauweise unterstützen oder eine andere Materialeigenschaft, wie z.B. eine thermische Isolationseigenschaft aufweisen.

Es ist bevorzugt vorgesehen, dass die mindestens eine Nadelpore in Richtung einer Bearbeitungsoberfläche der Schweißgruppe mindestens einseitig geöffnet ist. Insbesondere ist die mindestens eine Nadelpore genau einseitig geöffnet. Diese Ausgestaltung berücksichtigt, dass die Nadelpore oftmals von einem Schweißgrund bzw. einer Nahtwurzel in Richtung der Bearbeitungsoberfläche wächst, so dass eine Öffnung der mindestens eine Nadelpore an der Bearbeitungsoberfläche entsteht bzw. angeordnet ist und dort für die weitere Anwendung genutzt werden kann.

Ist die Nadelpore nicht bereits einseitig geöffnet, so kann die Öffnung der Nadelpore alternativ durch eine trennende Bearbeitung, insbesondere ein Abschleifen oder eine Materialwegnahme eingebracht werden.

Bei einer möglichen Weiterbildung der Erfindung ist vorgesehen, dass die mindestens eine Nadelpore beidseitig geöffnet ist. Somit weist die Nadelpore eine Eingangsöffnung an der Bearbeitungsoberfläche und eine Ausgangsöffnung an der Bearbeitungsunterseite und/oder an der Nahtwurzel auf. In dieser Ausgestaltung kann die mindestens eine Nadelpore als ein Durchgangskanal durch die Schweißnaht ausgebildet sein und in der späteren Anwendung als Durchgangskanal verwendet werden.

Ist die mindestens eine Nadelpore nach dem Schweißverfahren oder nach Bearbeitung nur einseitig und zwar in Richtung der Bearbeitungsoberfläche geöffnet, so kann durch eine trennende Bearbeitung, insbesondere ein Abschleifen oder eine Materialwegnahme, nachfolgend an der Bearbeitungsunterseite und/oder an der Nahtwurzel die Nadelpore zusätzlich geöffnet werden, so dass auf diese Weise der Durchgangskanal gebildet ist.

Es ist besonders bevorzugt, dass der Schweißvorgang als ein Laserschweißvorgang mit einem Laserstrahl ausgebildet ist. Der Laserstrahl wird insbesondere auf die Bearbeitungsoberfläche der Schweißgruppe gerichtet. Bei dem Laserschweißvorgang kann es sich um ein Wärmeleitungsschweißen oder um ein Tiefschweißen handeln.

Es ist bevorzugt vorgesehen, dass die Fügeflächen mindestens lokal oder insgesamt eine Fügeebene definieren. Für den Fall, dass entlang der geplanten Schweißnaht der Fügestoß nicht geradlinig ausgebildet ist, kann es sein, dass nur lokal, also in einem Abschnitt des Fügestoßes die Fügeebene definiert ist. Für den Fall, dass der Fügestoß geradlinig ist, bildet der gesamte Fügestoß die Fügeebene.

Der Laserstrahl wird gleichgerichtet zu der Fügeebene aufgebracht. So kann vorgesehen sein, dass dieser parallel zu der Fügeebene und/oder in der Fügeebene und insbesondere senkrecht zu der Bearbeitungsoberfläche angeordnet ist. Wie bei der Lasermaterialbearbeitung üblich, kann der Laserstrahl auch stechend oder schleppend entlang des Fügestoßes angeordnet werden. Alternativ oder ergänzend kann der Laserstrahl gewinkelt, zum Beispiel in einem Winkelbereich zwischen + 30° und - 30°, insbesondere zwischen + 10° und - 10° relativ zu der Fügeebene in Querrichtung zu dem Fügestoß aufgebracht werden.

Besonders gute Ergebnisse haben sich erzielen lassen, wenn das Material der Schweißpartner aus einer Gruppe ausgewählt ist, welche Kupfer, Kupferverbindungen, Aluminium, Aluminiumverbindung und Stahl umfasst. Diese Materialien haben sich als besonders geeignet für das Schweißverfahren erwiesen.

Es kann vorgesehen sein, dass das Kontaminationsmittel flüssig oder pastös ausgebildet ist. Dieses kann entsprechend auf die mindestens eine Fügefläche aufgesprüht, mechanisch aufgebracht, aufgedruckt oder in anderer Weise positioniert werden. Hierzu kann Schmiermittel oder Schmierfett eingesetzt werden. Alternativ können auch Lacke (oder deren Rückstände) oder Alkohol (wie z.B. Isopropanol) als Kontaminationsmittel verwendet werden.

Eine besonders vorteilhafte Alternative sieht vor, dass auf mindestens einem der Fügeflächen eine Oxidschicht erzeugt wird, wobei die Oxidschicht das Kontaminationsmittel exklusiv bildet oder mitbildet.

Bei Kupfer oder Kupferverbindungen kann die Oxidschicht beispielsweise durch ein Erwärmen des oder der Schweißpartner erzeugt werden. Um eine Strukturierung des Kontaminationsbereichs zu erhalten, kann die Oxidschicht teilweise wieder entfernt werden, zum Beispiel mit einer Säure, insbesondere Zitronensäure.

Es ist bevorzugt, dass entlang der Schweißnaht nicht nur genau eine Nadelpore, sondern eine Vielzahl von Nadelporen erzeugt wird. Beispielsweise werden entlang der Schweißnaht zumindest abschnittsweise mehr als 5 Nadelporen pro Zentimeter, insbesondere mehr als 10 Nadelporen pro Zentimeter erzeugt. Auf diese Weise reduziert sich die Einbringung der Nadelporen nicht auf Einzelfälle, sondern es ergibt sich eine Vielzahl der Nadelporen, welche für die spätere Anwendung genutzt werden können. Insbesondere werden die Nadelporen entlang der Schweißnaht mit einem regelmäßigen Abstand, oder in einem unregelmäßigen Abstand zueinander erzeugt.

Bei einer bevorzugten Weiterbildung der Erfindung wird das Kontaminationsmittel in einem Kontaminierungsmuster mit einer Kontaminierungsverteilung angeordnet. Beispielsweise wird das Kontaminierungsmittel entlang des Fügestoßes in einem regelmäßigen Muster mit Auslassungen aufgebracht. So ist es beispielsweise möglich, dass sich ein Abschnitt des Fügestoßes mit Kontaminierungsmuster mit einem Abschnitt des Fügestoßes ohne Kontaminierungsmittel abwechseln. Auf diese Weise wird in den Abschnitt ohne Kontaminierungsmittel ein hoch belastbarer Schweißnahtabschnitt gebildet und in den Abschnitten mit dem Kontaminierungsmittel Schweißnahtabschnitte mit einem oder mehreren Nadelpore gebildet. Vorzugsweise entspricht das Kontaminierungsmuster der Nadelporenlängsverteilung entlang der Schweißnaht.

Bevorzugt werden die Nadelporen im Bereich der Schweißnaht geplant verteilt:
Insbesondere wird eine Nadelporenlängsverteilungsplanung durchgeführt, wobei ausgehend von einer gewünschten Nadelporenlängsverteilung, welche beispielsweise datentechnisch festgehalten wird, eine Kontaminierungsverteilung für das Kontaminierungsmuster geplant wird. Das Kontaminierungsmuster ist somit ein Ergebnis oder eine Folge der Nadelporenlängsverteilungsplanung.

Optional ergänzend kann eine Nadelporenquerpositionsplanung durchgeführt werden, wobei ausgehend von gewünschten Nadelporenquerpositionen quer zur Schweißnaht der Laserstrahl von dem Fügestoß quer in Richtung der gewünschten Nadelporenquerpositionen ausgelenkt wird. Insgesamt wird somit entlang der Schweißnaht zunächst die Nadelporenlängsverteilung bestimmt und beispielsweise ergänzend eine Nadelporenquerverteilung bestimmt.

Es hat sich durch Versuche herausgestellt, dass die Nadelporen bei der Schweißnaht stets in Richtung des heißesten Punkts bei dem Schweißvorgang wachsen oder sich entwickeln. Für den Fall des Laserstrahlschweißens ist dies der Auftreffpunkt des Laserstrahls auf der Bearbeitungsoberfläche. Unter Nutzung dieser Wirkung ist es beispielsweise möglich, den Laserstrahl in Schlangenlinien oder in einer anderer Weise mit einer überlagerten Querbewegung entlang des Fügestoßes zu führen, wobei die Eingangsöffnungen der Nadelporen sich entlang der Querauslenkung des Laserstrahls an den mit dem Kontaminierungsmittel oder gemäß dem Kontaminierungsmuster kontaminierten Kontaminationsbereichen anordnen.

In einem nachfolgenden Schritt wird die mindestens eine Nadelpore mit einem Fluid gefüllt oder als Durchgangskanal für das Fluid verwendet. Bei dem Fluid kann es sich insbesondere um ein Kühlmittel oder um ein Schmiermittel handeln.

Als Kühlmittel kann beispielsweise Wasser oder eine Alkohol-Wasser Mischung gewählt werden. Als Schmiermittel kommt insbesondere Schmieröl, im Speziellen Getriebeöl, oder ein pastöser Schmierstoff, wie z.B. ein Schmierfett als eine Dauerschmierung infrage.

Ein weiterer Gegenstand der Erfindung wird durch eine Schweißgruppe mit zwei Schweißpartnern gebildet, wobei die Schweißnahtpartner mit einer Schweißnaht miteinander verbunden sind und wobei in der Schweißnaht zumindest eine, und insbesondere eine Mehrzahl, von Nadelporen angeordnet ist, wobei die Nadelporen mit dem Schweißverfahren erzeugt wurden, wie dieses zuvor beschrieben wurde.

Ein weiterer Gegenstand der Erfindung betrifft eine Verwendung der Schweißgruppe, wie diese zuvor beschrieben wurde, in einer Anwendung, wobei in der Anwendung die Nadelporen als Durchgangskanäle oder als Speicherreservoir für ein Fluid, wie dies zuvor beschrieben wurde, verwendet wird.

Die Erfindung beschreibt insbesondere die gezielte Erzeugung von Nadelporen zur Nutzung als Kanal, Barriere, Hohlraum, Isolation, oder zur Gewichtsersparnis durch Einbringen eines Hohlraums. Diese Nadelporen werden beim Schweißen bzw. Erwärmen von Material, vorzugsweise Kupfer oder Aluminium vorzugsweise mittels Laserstrahlung erzeugt. Durch das Verschweißen mindestens zweier Bauteile vorzugsweise in vertikaler Anordnung des Fügespalts führt bei durch zuvor gezielte Kontamination der Fügeflächen mit z.B. Restlack oder anorganischem, oder organischem Material oder Oxid zur Bildung dieser Nadelporen. Die Nadelporen entstehen dabei bei der Erstarrung des Materials an der Erstarrungsfront vermutlich durch Ausgasen der Kontamination oder Löslichkeitsänderung der gelösten Kontamination in der Schmelze. Der erzeugte Kanal kann z.B. für Durchströmung mittels Flüssigkeiten oder Gasen z.B. für eine Kühlung genutzt werden (Öl- oder Wasser-Kühlung). Weiterhin ist der Einsatz als Reservoire für z.B. Schmierstoffe denkbar. Die Nadelporen entstehen meist an der Nahtwurzel und wachsen (bei der Erstarrung) mit der Erstarrungslinie mit. Dementsprechend kann die Größe und Richtung durch eine geeignete und gezielte Einstellung der Temperatur/Temperaturgradient für die Erstarrung eingestellt werden und somit die Richtung und Größe der Nadelpore beeinflusst werden. Mit dem Verfahren lassen sich solche Kanäle nahezu beliebig in ihrem Durchmesser und Ihrer Richtung einstellen.

Weitere Merkmale, Vorteile und Wirkung der Erfindung ergeben sich aus der nachfolgenden Beschreibung bevorzugter Ausführungsbeispiele der Erfindung sowie der beigefügten Figuren. Diese zeigen:
Figur 1 ein Flussdiagramm zur Erläuterung eines Verfahrens zur Erzeugung einer Schweißnaht an einer Schweißgruppe mit Nadelporen als ein Ausführungsbeispiel der Erfindung;
Figur 2 eine schematische Draufsicht auf eine Schweißgruppe für das Verfahren mit zwei Schweißpartner zur Erläuterung der Begrifflichkeiten;
Figur 3 eine erstes Ausführungsbeispiel für eine Schweißgruppe mit der Schweißnaht, bei der die Schweißnaht geradlinig verläuft;
Figur 4 in gleicher Darstellung wie das vorhergehende Ausführungsbeispiel, ein weiteres Ausführungsbeispiel, wobei die Schweißnaht mit einem Laserstrahl mit Querauslenkung geschweißt wurde;
Figur 5 einen schematischen Querschnitt entlang des Fügestoßes nach dem Schweißvorgang.

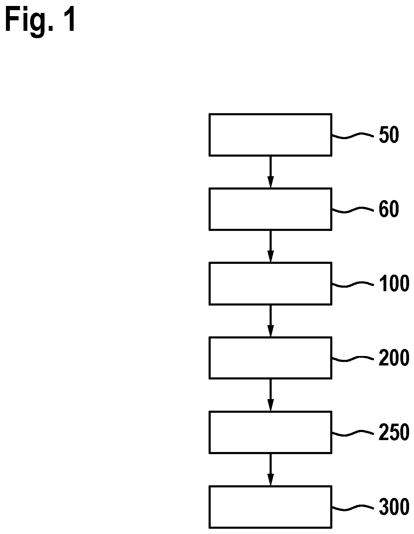

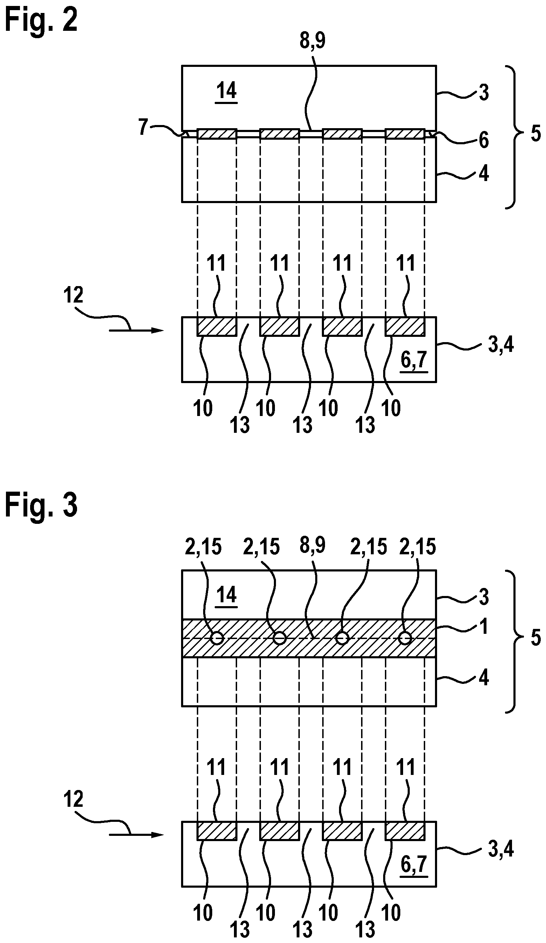

Die Figur 1 zeigt in einem schematischen Flussdiagramm ein Verfahren zur Erzeugung einer Schweißnaht 1 mit mindestens einer Nadelpore 2 bei einem Schweißvorgang von zwei Schweißpartnern 3, 4 zur Erzeugung einer Schweißgruppe 5, wie dies in Zusammenhang mit der Figur 2 erklärt wird:
Figur 2 zeigt die Schweißgruppe 5 vor der Schweißung in einer schematischen Draufsicht und darunter einen der Schweißpartner 3, 4 in einer Draufsicht auf seine Fügeflächen 6, 7.

Im oberen Teil der Figur 2 ist die Schweißgruppe 5 vor dem Schweißvorgang gezeigt. Es sind die zwei Schweißpartner 3, 4 zu sehen, welche jeweils eine Fügefläche 6, 7 aufweisen, wobei die Fügeflächen 6,7 kontaktierend aneinander angeordnet sind, so dass sich ein Fügestoß 8 in einer Fügeebene 9 bildet, wobei die Fügeebene 9 senkrecht zur Blattebene und/oder zu einer Bearbeitungsoberfläche 14 angeordnet ist. Die Fügeebene 9 ist gewinkelt, in diesem Ausführungsbeispiel senkrecht zu der Bearbeitungsoberfläche 14 angeordnet. Die Schweißpartner 3, 4 können aus Kupfer, einer Kupferlegierung, Aluminium, einer Aluminiumlegierung oder aus Stahl ausgebildet sein.

Vor dem eigentlichen Schweißvorgang in einem Schritt 200 wird in einem Schritt 100 ein Kontaminationsmittel 10 auf eine oder beide der Fügeflächen 6, 7 aufgebracht, um diese in einem Kontaminationsbereich 11 zu kontaminierten.

Aus der Figur 2 ist zu erkennen, dass das Kontaminationsmittel 10 optional nicht vollflächig aufgetragen wird, sondern in einem Kontaminierungsmuster 12 mit einer Kontaminierungsverteilung in mehrere Kontaminationsbereiche 11 aufgebracht ist. So wird das Kontaminationsmittel 10 in abgegrenzte Kontaminationsbereiche 11, welche beispielsweise durch Auslassungen 13 voneinander getrennt sind, aufgebracht. Das Kontaminationsmittel 10 wird in den Bereichen aufgebracht, die später die eigentliche Schweißnaht 1 bilden. Die Kontaminationsbereichen 11 bilden mit dem Kontaminationsmittel 10 einen Auslöser für die Erzeugung der Nadelporen 2. Die Kontaminationsbereiche 11 sind beispielsweise angrenzend an die Bearbeitungsoberfläche 14 der Schweißgruppe 5 eingebracht.

Das Kontaminationsmittel 10 kann als eine Flüssigkeit oder ein pastöser Stoff ausgebildet sein, wobei dieser insbesondere Oxide, z.B. Kupferoxid (CuO oder Cu₂0 oder Aluminiumoxid, oder Kohlenstoff oder Alkohol (Ethanol, Isopropanol, Aceton,...) oder OH-Gruppen oder COH-Gruppen aufweisen kann. Beispielsweise kann ein Öl oder ein Fett aufgebracht werden. Beispielsweise können Standöle (z.B. Raziol) oder Umformschmierstoffe oder Schmierfette verwendet werden oder Fette, wie sie in Fingerfett vorkommen.

Alternativ hierzu kann einer oder beide der Schweißpartner 3, 4 zuvor erhitzt werden, zum Beispiel in einem Ofen erhitzt werden, um eine Oxidschicht zu bilden, welche dann das Kontaminationsmittel 10 bildet. Um die Auslassungen 13 in dem Kontaminierungsmuster 12 und somit eine strukturierte Einbringung der Nadelporen 2 zu erreichen, kann die Oxidschicht zum Beispiel durch Säure, insbesondere Zitronensäure wieder abschnittsweise entfernt werden.

Die Figur 3 zeigt in gleicher Darstellung wie in der Figur 2 die Schweißgruppe 5, jedoch in dem obigen Bereich nach dem Schweißvorgang im Schritt 200, so dass die Schweißnaht 1 gebildet ist. Der Schweißvorgang wird insbesondere als ein Laserstrahlschweißen, im Speziellen als ein Laserstrahlwärmeleitungsschweißen oder als ein Laserstrahltiefschweißen umgesetzt. Hierfür wird der Laserstrahl (nicht gezeigt) gewinkelt auf die Bearbeitungsoberfläche 14, insbesondere gleichgerichtet bzw. parallel zu der Fügeebene 9 eingebracht. Dabei ist es möglich, dass der Laserstrahl stechend oder schleppend entlang der Bearbeitungsbahn abläuft und kann auch quer zum Verlauf des Fügestoßes 8 einen Winkel, z.B. zwischen -30° und + 30° aufweisen.

In der Figur 3 ist gezeigt, dass der Laserstrahl parallel zu dem Fügestoß 9 geführt wird. In den Kontaminationsbereichen 11 entstehen jeweils genau eine oder mehrere Nadelporen 2. Im unteren Bereich ist in gleicher Darstellung wie in der Figur 2 die Draufsicht auf die Fügeflächen 6, 7 vor der Schweißung gezeigt.

Die Anzahl der Nadelporen 2 kann beispielsweise durch eine Breite der Kontaminationsbereiche 11 in Bahnrichtung eingestellt werden. In den Figuren sind in Bahnrichtung aus grafischen Gründen ein vergleichsweise breiter Kontaminationsbereich 11 gezeigt. Es ist dagegen auch möglich, dass der Kontaminationsbereich 11 an eine Breite von einzelnen Nadelporen 2 angepasst ist, so dass dieser beispielsweise weniger als 2 mm breit ist. Auch in Tiefenrichtung kann der Kontaminationsbereich 11 reduziert werden, der Kontaminationsbereich 11 sollte jedoch so angeordnet sein, dass die zugehörige Fläche von der späteren Schweißnaht 1 überdeckt wird, so dass die Nadelpore 2 aus dem Kontaminationsmittel 10 gebildet werden kann.

Durch ein gradliniges Überfahren mit dem Laserstrahl entlang des Fügestoßes 9 werden Nadelporen 2 erzeugt, deren Eingangsöffnungen 15 ebenfalls schwerpunktmäßig auf dem Fügestoß 9 angeordnet sind.

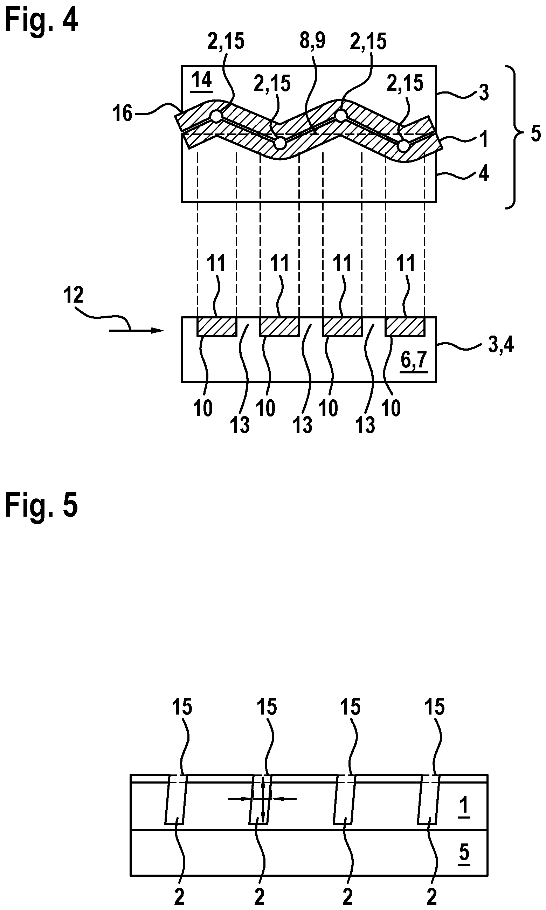

Die Figur 4 zeigt ein abgewandeltes Ausführungsbeispiel, wobei der Laserstrahl entlang einer Bearbeitungsbahn 16 in Schlangenlinien über die Bearbeitungsoberfläche 14 geführt wird. Im unteren Bereich ist in gleicher Darstellung wie in der Figur 2 die Draufsicht auf die Fügeflächen 6, 7 vor der Schweißung gezeigt. Die Position der Eingangsöffnungen 15 der Nadelporen 2 ergeben sich durch ein Wachsen der Nadelpore 2 zu dem heißesten Punkt der Bearbeitungsbahn 16, so dass durch ein Querversatz des Laserstrahls senkrecht zu dem Fügestoß 8 auch die Eingangsöffnung 15 der Nadelpore 2 in Querrichtung versetzt ist, wie dies in der Figur 4 schematisch dargestellt ist.

Somit ist es möglich, durch die Verteilung der Kontaminationsbereiche 11 die Anzahl der Nadelporen 2 entlang der Bearbeitungsbahn 16 und/oder des Fügestoßes 8 zu bestimmen und durch eine Auslenkung des Laserstrahls quer zur Längserstreckung des Fügestoßes 9, die Eingangsöffnungen 15 der Nadelpore 2 quer zu dem Fügestoß 8 zu versetzen.

Die Figur 5 zeigt einen schematischen Querschnitt entlang des Fügestoßes 8 nach dem Schweißvorgang in dem Schritt 200, wobei die Schweißnaht 1 schematisiert angedeutet ist. In dem Querschnitt sind mehrere Nadelporen 2 zu sehen. Die Nadelporen 2 weisen beispielhaft ein Schachtverhältnis (angedeutet durch die Pfeile in einer der Nadelporen 2), welches gebildet ist durch eine Verhältnis zwischen einer Porenlänge in Tiefenrichtung und einem Durchmesser in einem Querschnitt von größer als 2, vorzugsweise größer als 10 auf.

Die Anzahl und die Positionierung der Nadelporen 2 in der Schweißgruppe 5 kann somit durch die Kontaminationsverteilung als Kontaminierungsmuster 12 des Kontaminationsmittel 10 und durch die Bahnführung des Laserstrahls bestimmt werden.

Die Bahnführung des Laserstrahls kann auch so gestaltet werden, dass er eine Kreisbahn oder eine Spirale abfährt. Überlagert mit einer z.B. Reduzierung der Leistung wird auch eine Nadelporenbildung als Spirale möglich.

Bei der simplen Kreisbewegung, wobei der Kreis von dem Fügestoß geschnitten wird, wie sie z. B. beim stirnseitigem Verschweißen von Pins erfolgt, wachsen die Nadelporen in Richtung Mitte sternförmig zusammen. Es können somit nicht nur "Liniennähte" mit Variation der Schweißrichtung in Querrichtung, sondern auch der Laserstrahl z. B. im Kreis bewegt werden.

Für eine Planung der Verteilung der Nadelporen 2 in der Schweißgruppe 5, kann eine Nadelporenlängsverteilungsplanung in einem Schritt 50 durchgeführt werden, wobei ausgehend von einer gewünschten Nadelporenlängsverteilung entlang der Schweißnaht 1 und/oder entlang des Fügestoßes 8 die Kontaminierungsverteilung für das Kontaminierungsmittel 10 als Kontaminierungsmuster 12 geplant wird. Optional ergänzend kann in einem Schritt 60 eine Nadelporenquerpositionsplanung durchgeführt werden, wobei ausgehend von gewünschten Nadelporenquerpositionen, wie diese in der Figur 4 gezeigt sind, die Bahnplanung für den Laserstrahl so erfolgt, dass der Laserstrahl bei dem Schweißvorgang 200 von dem Fügestoß 8 quer in Richtung der gewünschten Nadelporenquerpositionen ausgelenkt wird. Auf diese Weise ist es möglich, ein beliebiges Muster von Nadelporen 2 auf der Schweißgruppe 5 in der Schweißnaht 1 zu verteilen.

In einem optionalen nachgeschalteten Schritt 300 kann eine Verwendung der Schweißgruppe 5 mit den Nadelporen 2 dadurch durchgeführt werden, dass diese zum Beispiel als Fluidreservoir für Schmiermittel oder Hohlraum oder dergleichen eingesetzt wird.

Die Nadelporen 2 können im Volumen gezielt eingebracht werden und somit optional 3D Strukturen ermöglichen.

Mögliche Anwendungsgebiete der Nadelporen 2 können sein:
▪ Schmierkanäle z.B. für Öl, Luft oder andere Fluide
▪ Kühlkanäle z.B. für Öl, Luft oder andere Fluide
▪ Schmierstoffreservoir
▪ Sollbruchstelle bei Anordnung vieler Nadelporen nebeneinander
▪ (Perforation im Volumen/entlang der Schweißnaht 1)

Des Weiteren können die Nadelporen 2 auch gezielt mehrfach eingebracht werden, um z.B. bei Aluminiumwerkstoffen zusätzlichen Leichtbau zu gewährleisten bzw. Gewicht einzusparen.

Je nach Prozessführung ist es möglich, dass die Nadelporen 2 nicht - wie gezeigt - nur einseitig geöffnet, sondern beidseitig geöffnet sind, so dass statt Sackporen Durchgangskanäle entstehen. Diese können in dem Schritt 300 bei der späteren Anwendung beispielsweise als Durchgangskanäle für Schmiermittel oder Kühlmittel verwendet werden.

Es ist auch möglich, dass für den Fall, dass die Nadelporen 2 mit Eingangsöffnung 15 und Ausgangsöffnung nicht erzeugbar sind, die Bearbeitungsunterseite in einem Zwischenschritt 250 trennend bearbeitet wird, so dass die Nadelporen 2 auch nach unten geöffnet sind, um die Durchgangskanäle zu bilden.

Als Parameter für die Erzeugung der Nadelporen mit einem Laserstrahl können die folgenden Parameter gewählt werden:
▪ Laserstrahlquellen, vorzugsweise in Infraroten, Grünen oder Blauen Wellenlängenbereich;
▪ Fokusdurchmesser vorzugsweise von 40 µm bis 1000 µm;
▪ Ausgangsleistungen für den Laserstrahl von 1 bis 20 kW;
▪ Schweißvorschubgeschwindigkeiten vorzugsweise von 10 mm/s bis 1000 mm/s;
▪ Vorzugsweise Kupfermaterial, jedoch sind Aluminiumwerkstoffe, oder Stahlwerkstoffe oder andere Werkstoffe für die Schweißpartner 3, 4 ebenfalls möglich.

## Patentansprüche

1. Schweißverfahren zur Erzeugung einer Schweißnaht (1) mit mindestens einer Nadelpore (2) bei einem Schweißvorgang (200) von zwei Schweißpartnern (3,4) zur Bildung einer Schweißgruppe (5),
wobei die Schweißpartner (3,4) jeweils eine Fügefläche (6,7) aufweisen, wobei die Schweißpartner (3,4) für den Schweißvorgang (200) an den Fügeflächen (6,7) benachbart und/oder kontaktierend angeordnet werden, um einen Fügestoß (8) zu bilden,
wobei vor dem Schweißvorgang (100) mindestens eine der Fügeflächen (6,7) mit einem Kontaminationsmittel (10) in einem Kontaminationsbereich (11) kontaminiert wird (100),
wobei bei dem Schweißvorgang (200) in der Schweißnaht (1) an dem Fügestoß (8) die mindestens eine Nadelpore (2) an der Nahtwurzel gebildet wird.

2. Schweißverfahren nach Anspruch 1, **dadurch gekennzeichnet, dass** die Nadelpore (2) mit einem Schachtverhältnis von Porenlänge zu Porendurchmesser von größer als 2, insbesondere größer als 10 eingebracht werden.

3. Schweißverfahren nach Anspruch 1 oder 2, **dadurch gekennzeichnet, dass** die Nadelporen (2) in Richtung einer Bearbeitungsoberfläche (14) oder Bearbeitungsunterseite der Schweißgruppe (5) ein- oder beidseitig geöffnet eingebracht werden oder nach dem Einbringen ein- oder beidseitig geöffnet werden.

4. Schweißverfahren nach einem der vorhergehenden Ansprüche, **dadurch gekennzeichnet, dass** der Schweißvorgang (200) als ein Laserschweißvorgang mit einem Laserstrahl erfolgt.

5. Schweißverfahren nach Anspruch 4, **dadurch gekennzeichnet, dass** die Fügeflächen (6,7) mindestens lokal eine Fügeebene (9) definieren, wobei der Laserstrahl gleichgerichtet zu der Fügeebene (9) aufgebracht wird.

6. Schweißverfahren nach einem der vorhergehenden Ansprüche, **dadurch gekennzeichnet, dass** das Material der Schweißpartner (3,4) ausgewählt ist aus der Gruppe umfassend: Kupfer, Kupferverbindungen, Aluminium, Aluminiumverbindungen und/oder Stahl.

7. Schweißverfahren nach einem der vorhergehenden Ansprüche, **dadurch gekennzeichnet, dass** das Kontaminationsmittel (10) flüssig oder pastös ausgebildet ist.

8. Schweißverfahren nach einem der vorhergehenden Ansprüche, **dadurch gekennzeichnet, dass** auf mindestens einer der Fügeflächen (6,7) eine Oxidschicht erzeugt wird, wobei die Oxidschicht das Kontaminationsmittel (10) exklusiv bildet oder mitbildet.

9. Schweißverfahren nach einem der vorhergehenden Ansprüche, **dadurch gekennzeichnet, dass** das Kontaminationsmittel (10) in einem Kontaminierungsmuster (12) mit einer Kontaminierungsverteilung angeordnet wird.

10. Schweißverfahren nach Anspruch 9, **dadurch gekennzeichnet, dass** eine Nadelporenlängsverteilungsplanung (50) durchgeführt wird, wobei ausgehend von einer gewünschten Nadelporenlängsverteilung entlang der Schweißnaht (1) eine Kontaminierungsverteilung für das Kontaminierungsmuster (12) geplant wird.

11. Schweißverfahren nach einem der vorhergehenden Ansprüche, **dadurch gekennzeichnet, dass** eine Nadelporenquerpositionsplanung (60) durchgeführt wird, wobei ausgehend von gewünschten Nadelporenquerpositionen quer zur Schweißnaht (1) der Laserstrahl von dem Fügestoß (8) quer in Richtung der gewünschten Nadelporenquerpositionen ausgelenkt wird.

12. Schweißverfahren nach einem der vorhergehenden Ansprüche, **dadurch gekennzeichnet, dass** die Nadelporen (2) mit einem Fluid gefüllt werden, wobei das Fluid ausgewählt ist aus der Gruppe: Kühlmittel, Schmiermittel, Gas.

13. Schweißgruppe (5) mit zwei Schweißpartnern (3,4), wobei die Schweißpartner (3,4) mit einer Schweißnaht (1) miteinander verbunden sind, wobei in der Schweißnaht (1) zumindest eine Nadelpore (2), insbesondere eine Mehrzahl von Nadelporen (2), angeordnet ist, wobei die Nadelporen (2) mit dem Schweißverfahren nach einem der vorhergehenden Ansprüche erzeugt sind.

14. Schweißgruppe nach Anspruch 13, **dadurch gekennzeichnet, dass** die zumindest eine Nadelpore (2) ein Schachtverhältnis von Porenlänge zu Porendurchmesser von größer als 2, insbesondere größer als 10 aufweist.

15. Schweißgruppe nach einem der Ansprüche 13 oder 14, **dadurch gekennzeichnet, dass** die zumindest eine Nadelpore (2) in Richtung einer Bearbeitungsoberfläche (14) oder Bearbeitungsunterseite der Schweißgruppe (5) einseitig geöffnet ist.

16. Schweißgruppe nach einem der Ansprüche 13 oder 14, **dadurch gekennzeichnet, dass** die zumindest eine Nadelpore (2) beidseitig geöffnet ist.

17. Verwendung der Schweißgruppe (5) nach einem der Ansprüche 13-16 in einer Anwendung, wobei in der Anwendung die zumindest eine Nadelpore (2) als Durchgangskanal oder als Speicherreservoir für ein Fluid verwendet wird.
